# EUROPEAN PATENT APPLICATION

(11) **EP 2 098 119 A1**
(43) Date of publication of application: **09.09.2009**
(21) Application number: 08151499.4
(22) Date of filing: 15.02.2008
(51) Int. Cl.: A01N 25/18, A01N 25/34, A01N 53/10, A01N 53/06, A01N 65/00, A01N 49/00, A01P 7/04, A01M 1/20

(54) **Sustained release insecticide composition**

(71) Applicant: Sara Lee/DE N.V., 3532 AA Utrecht (NL)
(72) Inventor: The designation of the inventor has not yet been filed
(74) Representative: Hatzmann, Martin

(57) **Abstract**

Disclosed is a sustained release insecticide composition based on a porous, preferably tabletted structure. The insecticide is combined with a carrier comprising two components, a bulking material such as lactose and a porosity providing material such as calcium carbonate. The insecticide preferably is transfluthrin. Insecticide loads of 6-20 % by weight can be achieved, leading to a duration of action of 1-4 months.

## Description

The invention pertains to a sustained release insecticide composition comprising a carrier and a vaporizable insecticide such as transfluthrin. The invention particularly pertains to a sustained release insecticide composition in the form of a unit dose such as a tablet, and to a device adapted to holding such a tablet.

In the sustained release of insecticides it is desired to provide compositions that exert a long duration of action, preferably while providing a period of at least one week, and more preferably several weeks, of constant release of the insecticide. Depending on the composition, the insecticide is released by its natural evaporation. This is the case, e.g., with insecticide-impregnated papers and the like. Other insecticide-releasing compositions are suitable for use in devices that cause the insecticide to evaporate by the application of energy, such as heat.

A particular desire is to provide a composition that has a duration of action of about 1-4 months, preferably 2-3 months. This has the advantage that the consumer can use one single composition during a full season (as in many countries the summer season of 2-3 months is the main season during which insecticide action is desired). This particularly pertains to combating flies, mosquitoes and other bugs in households, offices, schools, etc.

To the extent that insecticidal compositions exist that have a long duration of action, these are generally based on traditional solvent-based formulations. In such a case a liquid, being a solution of an insecticide in an organic solvent, will be evaporated over time.

The invention relates to more modern insecticidal compositions that are essentially free of organic solvents, particularly free of volatile organic solvents. Non-solvent based insecticidal compositions exerting a duration of action of as long as several months hitherto do not exist. A problem is that the amount of insecticide needed to provide the desired long duration of action cannot be simply dissolved in anything other than an organic solvent.

In the field of sustained release preparations of insecticides, various polymeric materials have been proposed. Such compositions are usually directed to a use of one day, or a few days at most. See, e.g., US 6,706,761, that discloses compositions of transfluthrin in polymer tablets, used in cycles of 1 or 3 days.

It is desired to provide a composition of a vaporizable insecticide that does not require the presence of volatile organic solvent, and yet has a long duration of action of at least a week, preferably at least a month, and more preferably last for a season of 2-3 months or even longer (particularly upon night-time use).

To this end, the invention provides a composition comprising a vaporizable insecticide and an inert carrier, the carrier comprising a two-component system comprising a bulking material (diluent, filler) and a porosity providing material (absorbent).

Without wishing to be bound by theory, the present inventors believe that the creation of a porous structure in a two-component carrier system serves to strike the optimal balance between the containment and the release of the insecticide.

The diluent can be any material that is inert, that does not itself blend in solution with the insecticide, and that can be mixed with a porosity providing material. Suitable bulking materials include diluents that are known from pharmaceutical formulations, such as cellulose, lactose, sucrose, sorbitol, mannitol. Obviously, as the insecticide tablet is not intended for human intake, a wider range of possible bulking agents is possible, e.g. fillers as used in laundry detergents (e.g. sodium sulfate or borate)..

Preferably the bulking agent is a type of excipient that can be used in making direct compression tablets, such as spray-dried lactose (e.g. Lactopress®) or spray-dried maltose (Advantose®). Other direct compression diluents are known from making pharmaceutical tablet formulations, for instance microcrystalline celluloses, modified celluloses (e.g.hydroxymethyl cellulose), corn starch, dibasic calcium phosphate, sucrose, mannitol, sorbitol.

The porosity providing material typically is a carbonate or bicarbonate. Preferably, sodium carbonate, sodium bicarbonate or calcium carbonate is used. A preferred sodium carbonate is "porous soda" (e.g. Soda Ash IPH ex Solvay, which is a sodium carbonate having a smaller particle size than normal sodium ) carbonate, which has a particle size distribution (determined by sieve analysis and based on weight) wherein at most 25% of the particles are smaller than 160 µm. This sodium carbonate has also higher specific surface area than normal sodium carbonate, which has a specific surface area (determined according to the standard BET area measurement) of approximately 0.2 m²/g.

The weight ratio in which the diluent and the absorbent are used, can vary from 10:1 to 1:10. Preferably the weight ratio is closer, i.e. 3:1 to 1:3 and more preferably 2:1 to 1:1. The two components mentioned will generally comprise more than 50 wt.% of the carrier, and preferably 80-100%. In another preferred embodiment, the porosity providing material (preferably calcium carbonate) is present in a weight excess as compared to the bulking material (perefrably spray-dried lactose), and preferably of from 3:1 to 10:1.

The insecticide can generally be any insecticide that is vaporizable (respectively sublimable if solid at the temperature at which it is held during use). One of the preferred classes of insecticides are pyrethroids. Pyrethroid insecticides are a group of man-made pesticides similar to the natural pesticide pyrethrum, which is produced by chrysanthemum flowers. Several pyrethroids exist of different chemical and physical properties. In the present invention the insecticide is vaporizable, which means that if used at regular ambient temperature it can be dispensed to the surroundings with the aid of energy input such as a heater. These pyrethroids are thus volatile. A few of them are volatile at room temperature and capable of evaporating without additional energy. Preferred pyrethroid insecticides are selected from the group consisting of transfluthrin, metofluthrin, d-allethrin, prallethrin, esbiothrin, natural pyrethrum extract and empenthrin. Preferred non-pyrethroid volatile insecticides are selected from the group consisting of citronella, citronellol, geraniol and linalool.

The amount of insecticide with which the composition of the invention is loaded, can be varied as desired. Generally, the insecticide will be present in a weight percentage of from 1 to 50%, preferably 3 to 30%, and more preferably 6 to 20%. It will be apparent to the person skilled in the art, that the various variables in the composition can be adjusted so as to obtain a formulation having the desired effect. E.g., with transfluthrin as the insecticide and a composition having a weight ratio of 1.5-2.5 parts of calcium carbonate and 2.5-3.5 parts of spray-dried lactose, some 15 to 20 weight % of insecticide will be accommodated in the composition, leading to a desired duration of action of 2-4 months. With other insecticides and other excipients, the ideal percentages may differ, but can be easily set by the person skilled in the art based on experience or, if needed, by straightforwardly testing the duration of action and adjusting the composition as desired.

The higher the amount of insecticide that is desired, the more porous the appropriate structure will be. As will be apparent to the skilled person, the composition will be more porous if the percentage absorbent is increased. The composition will become stronger (more coherent) with an increased percentage of the diluent.

In addition to the insecticide and the two carrier components mentioned, the composition may comprise further ingredients such as a lubricant (e.g. magnesium stearate, talc, stearic acid, hydrogenated oil, sodium stearyl fumarate), a colorant, and if desired a fragrance.

Thus, the invention also relates to the use, in making insecticidal formulations, of excipients that are regularly used in making pharmaceutical formulations, preferably tablet formulations, and more preferably direct compression excipients. For example, methods and compositions for making tablets and pills have been described in Remington's (18th edition, A.R. Gennaro Ed., Mack Publishing Co. Easton, Pa, 1990), at pages 1633 through 1665. Pharmaceutical diluents or "filler excipients" are agents added to dosage units to increase the granules' and resulting dosage units' bulk, and to improve dry-binding characteristics. The preferred diluent for use in this regard is lactose. Other diluents include mannitol, sorbitol, (spray dried) lactose, (microcrystalline) cellulose, ethyl cellulose, xylitol, amylose, starch, starch-derivatives, dextrose, fructose, calcium carbonate, calcium phosphate, NaCaPO4, sucrose, and mixtures thereof. Binders may also be present. Binders are agents used to impart cohesive properties to the granules and tablets, resulting in more physically stable dosage units, and include hydroxypropylcellulose, amylopectin, starch, povidone (polyvinylpyrrolidone), hydroxypropylmethylcellulose, gelatin, polyethyleneglycols, ethyl cellulose, acacia gum, gelatin, glycerol, and starch based binders. The preferred binder for use with the invention is polyvinylpyrrolidone. If present, a binder will typically make up from 0.5 to 5 % by weight.

In a preferred embodiment, a dye is present.

A problem associated with sustained-release insecticide compositions is to make it visible when the composition is no longer active. The better the sustained release (in terms of active life), the greater this problem is. E.g. daily replacement would be a simple routine for a user. The need for replacement after several weeks, however, would be more easily missed.

To this end, it is proposed in EP 1 709 980 to provide a tablet that is evanescent, i.e. that substantially disappears over an interval of time. Its disappearance serves as the indicator that replacement is needed. This has several drawbacks. One is that a precise adaptation is required of the period of existence of the tablet carrier, and the active life of the insecticide. This may lead to complications in design and production, and to uncertainties during use. For, the times of disappearance of the tablet carrier and the insecticide may be equal in one environment and not equal (depending on, e.g., relative humidity and environmental temperature) in another. It were not desired if the insecticide disappears before the tablet does (as in that case the indicator does not work). It were also not desired if the tablet disappears before the insecticide does (as one would be prompted to replace a tablet in a holder still containing insecticide). Further, the tablet disappears by means of sublimation, thus loading the environment of the device not only with insecticide, but also with tablet carrier material. It will be apparent that it is desired, where possible, to reduce the amounts and types of material loading a human indoor environment.

In solvent-based systems for the sustained release of insecticide, a dye can be dissolved with the insecticide and lend colour to the insecticide composition. Both the insecticide and the dye will evaporate with the solvent, and a fading (and ultimately disappearing) colour will automatically coincide with the disappearance of the insecticide from the composition. Whilst this is a much more straightforward method of indicating the presence and disappearance of the insecticide, it is simply not suitable for compositions wherein the insecticide is not solvent-based. The present invention relates to compositions that do not require solvent for the evaporation of the insecticide. Essentially, the dye is dissolved in the insecticide. Upon full or nearly full evaporation of the insecticide, the dye will go out of solution and loose its colour. This can be seen as a sudden change form coloured to white, but it can also go more gradually, if a small amount of dye remains dissolved in an small remainder of the insecticide. Upon full evaporation of the insecticide, the colour will have gone.

Suitable dyes include solvent Green 3, Solvent Blue 35, Solvent Yellow 18, Solvent Red 1, Solvent Yellow 33, Solvent Violet 13, Solvent Violet 37, Solvent Blue 26, Solvent Violet 14, Solvent Blue 104, Solvent Violet 3,..and mixtures thereof.

In the manufacture of the composition of the invention, it is generally sufficient if the ingredients are just mixed and tableted. Tableting techniques are known to persons skilled in pharmaceutical tableting or in laundry detergent tableting. Generally, a tablet press will be used.

After mixing it may be convenient, as is customary in the art of tableting, to conduct a pre-granulation step to achieve the best granulometry of the powder for tableting. The eventual tablet pressure will generally depend on the selected powder weight and dimensions of the tablet. This is standard operational knowledge in tablet making. Suitable compaction pressures are generally between about 0.5 and 500 MPa.

To obtain a preferred high load of the insecticide, it is preferred that the insecticide be mixed with the carrier components while in a liquid state. Hence, manufacture of the composition of the invention will then take place at a temperature above the melting point of the insecticide. Some insecticides have melting points above regular ambient temperature (e.g. transfluthrin, at 32°C), i.e. in that case the insecticide composition is prepared at elevated temperature (in the case of transfluthrin at, e.g. 35-40°C).

In view of the foregoing, the invention also pertains to sustained release insecticidal compositions obtainable by providing a carrier comprising the aforementioned two components and mixing these components with an insecticide that is in a liquid state. The preferred order of the mixing is first all solid ingredients except the lubricant. Then the liquid insecticide (preferably with a dye dissolved in it) is added with a spraying system while stirring the mix, to lead to fine liquid particles and homogenous distribution into the powder. Finally a solid lubricant can be added, followed by homogeneization. The resulting compositions are distinguished not only by a desirable porous structure, but moreover by a desirable high load of insecticide contained in said porous structure.

It is preferred for the composition to be in the form of a unit dose that can be placed in a holder of a device from which the insecticide is released, particularly a device comprising a heater. The device can be made to allow a refill, to which end it is advantageous if the composition is in the form of a tablet. The product can also be in the form of a disposable device, for single use.

The invention also pertains to a dispenser in which the composition is contained, and which includes a heater. The heater will normally operate based on electrical current, which can be provided by one or more batteries, but preferably and more conveniently just can be plugged directly into an AC socket (e.g. 230V).

The invention is illustrated hereinafter with reference to the Figures and the Example. These are non-limiting. Within the scope of the invention many variations can be made.
Figure 1 is a drawing that shows a dispenser of the invention.
Figure 2 is a graph that shows a typical evaporation profile of a composition of the invention.

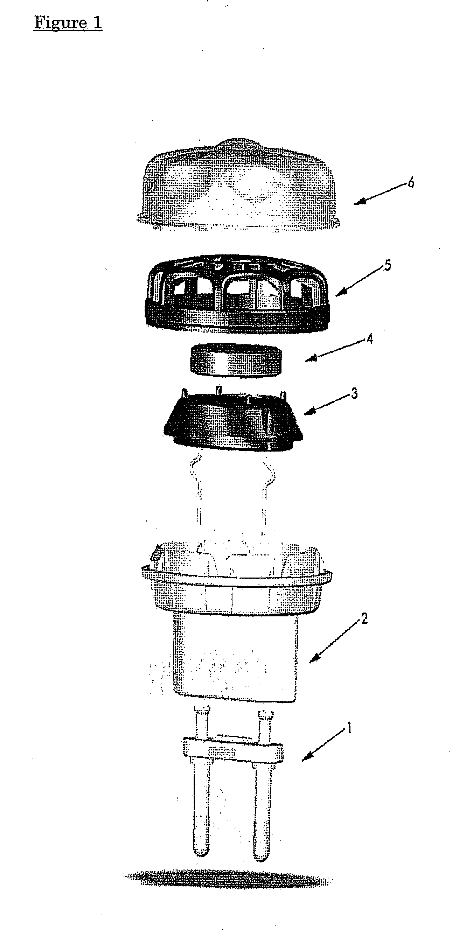

The dispenser of the invention is illustrated in the Figure 1, with reference to the following parts: a plug, i.e. a pin bridge (1), a plug deck (2), a heater (3), a tablet (4), a shroud (5), and a cap (6). It will be apparent that the heater (3) operates on the basis of current input when the plug (1) is put into an electrical socket. The plug deck (2) serves to hold the heater (3). The latter is based on a cemented electrical wire resistance. A typical heater temperature is of from 50°C to 180°C, preferably of from 85°C to 100°C. The heater (3) will heat the tablet (4) so as to allow the insecticide to evaporate through the openings in the shroud (5). The shroud aids in storage stability by isolating the tablet from the ambient external conditions (e.g. humidity).

Thus, the dispenser of the invention typically comprises a composition as described hereinbefore, wherein the composition is in the form of a tablet (4) placed adjacent to a heater (3), the device further comprising an electrical current provider, preferably a plug (1) provided with a plug deck (2) that provides an electrical connection to the heater (3), and a cover for the tablet (4), preferably comprising a shroud (5) and a cap (6).

The depicted device is an illustrative example of a single-use disposable device. Depending on the structure of the device, e.g. if the shroud (4) and the cap (5) are fixed onto the plug deck (2) in such a way as to be releasable and refixable, the tablet (4) can be replaced. In a preferred embodiment, the tablet will show its end of active life by the incorporation of a dye that will loose its colour once all or nearly all of the insecticide has evaporated.

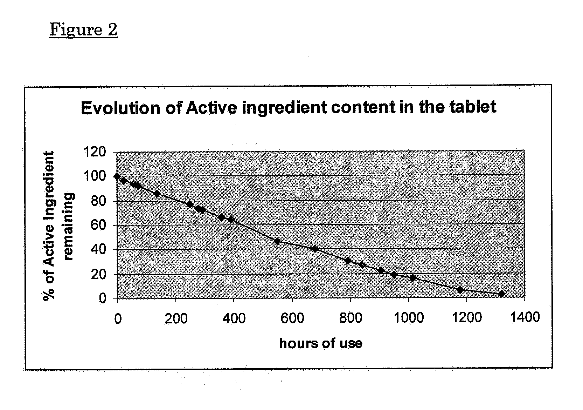

The graph in Figure 2 shows, on the vertical axis, the percentage of the active ingredient in a tablet such as prepared in the Example. On the horizontal axis the time (in hours) is shown, during which the tablet is subjected to evaporation in a device as in Figure 1.

### Example

A compact powder tablet is made by mixing the ingredients listed below. The CaCO₃ and the spray-dried lactose are dry-mixed first. Then the insecticide (TFT TG which is transfluthrin TG) with the dye dissolved therein is sprayed into the formulation and homogenized. Finally the magnesium stearate is added, and the mixture is pressed to a 22mm diameter tablet. The tablet thus is composed of a mix of powders and the insecticide, and weighs approximately 3.2g. The tablet is fixed on a heater unit where occurs the evaporation of the active ingredients at 90-100°C. The colour of the tablet changes during the use of the product, serving as an end of use indicator once the product is finished.

| **Ingredient** | **% W/W** |
|---|---|
| CaCO₃ | 25,39 |
| Lactopress spraydried 250 | 55,59 |
| Magnesium stearate | 2 |
| TFT TG | 17 |
| Dye | 0,02 |

## Claims

1. A sustained release insecticide composition comprising a vaporizable insecticide and an inert carrier, the carrier comprising a two-component system comprising a bulking material and a porosity providing material.

2. A composition according to claim 1, wherein the bulking material is selected from the group of direct compressing excipients.

3. A composition according to claim 2, wherein the bulking material is selected from the group consisting of lactose, maltose, and mixtures thereof, and preferably selected from the group consisting of spray-dried lactose, spray-dried maltose, and mixtures thereof.

4. A composition according to any one of the preceding claims, wherein the porosity providing material is selected from the group consisting of sodium carbonate, sodium bicarbonate, calcium carbonate, and mixtures thereof.

5. A composition according to any one of the preceding claims, wherein the weight ratio of the bulking material to the porosity providing material ranges from 1:10 to 10:1, preferably of from 1:5 to 5:1.

6. A composition according to any one of the preceding claims, wherein the insecticide is present in an amount of from 1% to 50%, by weight, preferably of from 6% to 20%, by weight.

7. A composition according to any one of the preceding claims, in the form of a compressed tablet..

8. A composition according to claim 7, wherein the carrier comprises 50 to 100%, preferably 80-100%, of the components calcium carbonate as the porosity providing material and spray-dried lactose as the bulking material, and wherein the mutual weight ratio of said components is 1.5-2.5 parts by weight of calcium carbonate and 2.5-3.5 parts by weight of spray-dried lactose.

9. A composition according to claim 7, wherein the carrier comprises 50 to 100%, perefarbly 80-100%, of the components calcium carbonate as the porosity providing material and spray-dried lactose as the bulking material, and wherein the weight ratio of calcium carbonate to spray-dried lactose is of from 3:1 to 10:1.

10. A composition according to any one of the preceding claims, wherein the insecticide is selected from the group consisting of transfluthrin, metofluthrin, d-allethrin, prallethrin, esbiothrin, natural pyrethrum extract, empenthrin. citronella, citronellol, geraniol and linalool.

11. A composition according to claim 10, wherein the insecticide is of from 6% to 20%, by weight, of transfluthrin.

12. A composition according to any one of the preceding claims, further comprising a dye dissolved in the insecticide.

13. A method of making a composition according to any one of the preceding claims, wherein the ingredients are mixed, and preferably tabletted, at a temperature above the melting point of the insecticide.

14. An insecticide dispenser comprising a composition according to any one of the claims 1-12, wherein the composition is in the form of a tablet (4) placed adjacent to a heater (3), the device further comprising an electrical current provider, preferably a plug (1) provided with a plug deck (2) that provides an electrical connection to the heater (3), and a cover for the tablet (4), preferably comprising a shroud (5) and a cap (6).
